# FASCICULE DE BREVET EUROPEEN

(11) **EP 0 952 097 B1**
(45) Date de publication et mention de la délivrance du brevet: **26.11.2003**
(21) Numéro de dépôt: 99420100.2
(22) Date de dépôt: 21.04.1999
(51) Int. Cl.: B65G 13/10

(54) **Dispositif pour modifier les conditions de déplacement d'une charge sur un convoyeur à rouleaux**
Vorrichtung zur Änderung der Lastverschiebungskonditionen auf einem Rollenförderer
Device for changing the load-moving conditions on a roller conveyor

(30) Priorité: 21.04.1998 FR 9805218
(43) Date de publication de la demande: 27.10.1999
(73) Titulaire: Rouleaux Pack SA, 42130 Boen Sur Lignon (FR)
(72) Inventeur: Gauchon, Christian, 42600 Moingt (FR)
(74) Mandataire: Maureau, Philippe

(56) Documents cités:
- EP-A- 0 781 717
- US-A- 3 356 236
- US-A- 3 370 685

## Description

L'invention concerne le domaine des convoyeurs à rouleaux composés d'un châssis portant des rouleaux qui, parallèles entre eux et horizontaux, sont montés libres en rotation dans le châssis et sont reliés à des moyens aptes à les entraîner en rotation, au moins dans un sens, pour déplacer longitudinalement les charges posées sur eux.

Actuellement, le changement de direction de la trajectoire des charges nécessite d'avoir recours à des convoyeurs courbes qui, ayant une courbure dépendant de la longueur maximum des charges, sont encombrants.

Pour les changements de direction à angle droit, par exemple entre deux convoyeurs perpendiculaires, il faut aménager, dans la zone de transfert, un plateau de réception des charges provenant du premier convoyeur, ces charges étant préalablement ralenties puis arrêtées, et un poussoir rétractable transférant la charge sur l'autre convoyeur, où elle est accélérée. Une telle opération augmente le temps de déplacement des charges.

On connaît par le document EP-A-781717, qui forme la base pour le préambule de la revendication 1, une installation pour le transport de charge sur un convoyeur à rouleaux utilisant un dispositif transférant une charge déplacée par un premier convoyeur sur un second convoyeur, orienté différemment du premier convoyeur. Ce dispositif est composé d'au moins deux corps rotatifs, dont chacun est en forme d'arbre ou de rouleau, est parallèle aux rouleaux du premier convoyeur, est relié à des moyens d'entraînement en rotation et porte au moins un corps rotatif en forme d'anneau, cet anneau étant libre en rotation et ayant un axe de rotation qui est excentré et incliné par rapport à l'axe de rotation du rouleau qui le porte. Quand une charge est amenée sur le dispositif elle reçoit, par le ou les anneaux venant en contact avec son fond, un effort d'entraînement dirigé vers le second convoyeur. En pratique, chaque rouleau du dispositif de transfert porte plusieurs anneaux disposés dans des gorges de guidage, décentrées les unes par rapport aux autres et formées par l'assemblage de tronçons de rouleau. II résulte de cette conception que les tronçons sont complexes à usiner, que leur montage doit être minutieux pour respecter les angulations des anneaux et que le dispositif est coûteux et fragile.

La présente invention a pour objet de remédier à ces inconvénients en fournissant un dispositif simple et facile à réaliser, peu encombrant, et permettant de modifier les conditions de déplacement des charges et, en particulier, leur direction de déplacement, sans entraîner l'interruption du transfert de ces charges.

A cet effet, les corps rotatifs de chacun des rouleaux du dispositif selon l'invention sont constitués par les galets d'une chaîne à galets, dont plusieurs anneaux ou spires sont enroulés et fixés sur la périphérie du dit rouleau, chacun de ces galets a) ayant un axe de rotation formant par rapport à l'axe de rotation du rouleau qui les porte un angle compris entre 0 et 60 °, b) étant libre en rotation par rapport à ses maillons et, c) dépassant au moins localement de ceux-ci pour venir en contact avec la charge, dans le plan d'appui délimité par les autres rouleaux du convoyeur.

Lorsque la charge véhiculée par les rouleaux normaux du convoyeur parvient sur les rouleaux à chaîne à galets, ceux-ci se comportent comme des rouleaux normaux si aucun obstacle ne s'oppose au déplacement de la charge. Par contre, si la charge est soumise à un effort de retenue et prend une vitesse linéaire inférieure à celle des chaînes à galets, les galets venant en contact avec elle lui transmettent, en raison de leur inclinaison, un effort transversal tendant à chasser la charge transversalement du convoyeur et cela avec une vitesse qui dépend de l'angle d'inclinaison de l'hélice de la chaîne.

Selon les formes de réalisation, les moyens de retenue de la charge sont constitués par des butées, fixes ou éclipsables, ou par une autre paire de rouleaux à chaîne à galets disposés en aval des premiers, mais dont le sens d'enroulement des chaînes est inverse de celui des chaînes de ces premiers rouleaux, ces seconds rouleaux étant reliés à des moyens d'entraînement en rotation distincts de ceux des premiers rouleaux et dont le sens de rotation est réversible.

Dans une autre application, le dispositif comprend au moins deux rouleaux sur chacun desquels des chaînes à galets sont enroulées avec un angle de spire nul et forment des anneaux, ces rouleaux étant reliés à des moyens d'entraînement en rotation distincts de ceux d'entraînement des rouleaux normaux du convoyeur et aptes à entraîner les rouleaux à chaîne à galets à une vitesse différente de celle des rouleaux normaux, pour ralentir ou accélérer les charges.
Figures 3 et 4 sont des vues de côté en élévation montrant, respectivement, le maillon extérieur et le maillon intérieur de la chaîne,
Figure 5 est une vue en coupe transversale suivant V-V de figure 2,
Figures 6 à 10 sont des vues en plan par dessus montrant différentes applications du dispositif selon l'invention,
Figure 11 est une vue de côté, en coupe transversale, montrant une autre application du dispositif,
Figure 12 est une vue en plan par dessus montrant le dispositif dans le cas de son application à la rotation d'une charge.

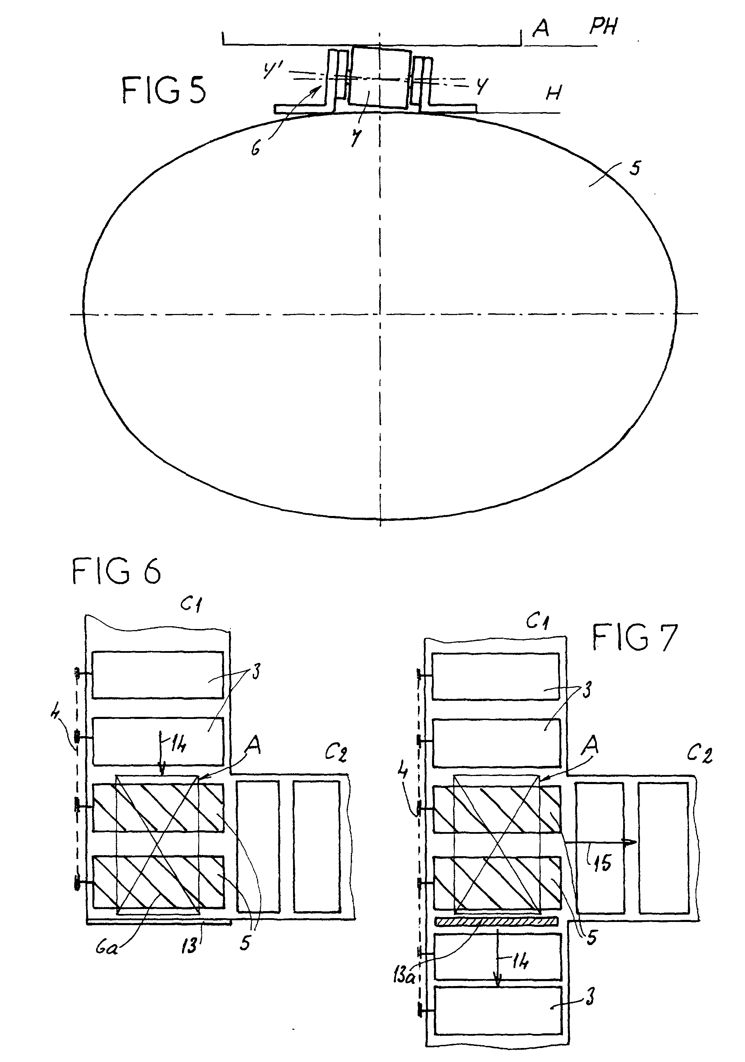

Comme montré à la figure 6, l'invention est relative à des convoyeurs à rouleaux C1, C2, Cn, composés d'un châssis 2 portant des rouleaux 3, parallèles et horizontaux, montés libres en rotation dans ce châssis et reliés à des moyens aptes à les entraîner en rotation à la même vitesse ou à vitesse différente. Ces moyens sont, par exemple, constitués par des pignons calés sur l'arbre de chaque rouleau 3 et sur lequel s'engrènent des chaînes ou des courroies crantées 4.

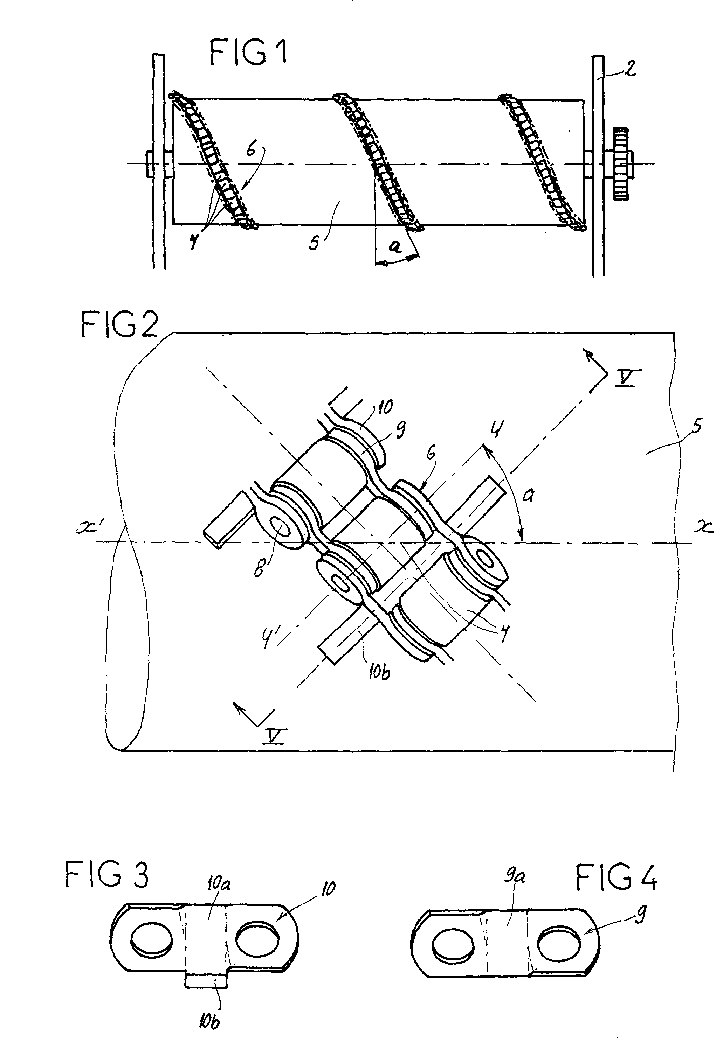

Le dispositif selon l'invention qui est inclus dans un convoyeur du type précité, comprend au moins deux rouleaux 5, de plus petit diamètre et portant chacun, une chaîne 6 à galets 7, enroulée sur sa périphérie. Dans la forme d'exécution représentée aux figures 1 à 10, chaque chaîne est enroulée en hélice sur un rouleau 5 en s'étendant de l'une de ses extrémités à son autre extrémité. L'angle d'hélice a peut varier de quelques degrés à 60 °. Cette hélice peut être enroulée à droite, c'est à dire en allant de gauche à droite, ou au contraire à gauche, c'est à dire en allant de droite à gauche en fonction des applications.

Comme le montre la figure 2, chacun des galets 7 de la chaîne 6 est monté libre en rotation sur un axe 8 dont chacune des extrémités traverse l'un des paliers d'un maillon interne 9 et l'un des paliers d'un maillon externe 10 sur lequel il est riveté. L'axe géométrique y'-y de chacun des axes 8 est bien entendu incliné d'un angle a par rapport à l'axe longitudinal x'-x du rouleau 5, comme montré à la figure 2.

Pour faciliter le vrillage de la chaîne autour du rouleau 5, chacun des maillons internes 9 et externes 10 de celle-ci est vrillé, comme montré aux respectivement aux figures 4 et 3. Cet angle de vrillage ou de gauchissement est déterminé en rapport avec l'angle de l'hélice d'enroulement de la chaîne 6 sur le rouleau 5 et avec le diamètre extérieur de ce rouleau. Les figures 3 et 4 montrent que ce vrillage n'affecte que les extrémités de chacun des maillons 9 et 10 qui gardent donc une partie centrale non vrillée, respectivement 9a, 10a.

Dans la forme d'exécution représentée, la partie centrale 10a de chacun des maillons extérieurs 10 est solidaire d'une patte coudée 10b qui, lorsque le maillon est assemblé, fait saillie vers l'extérieur et vers le bas et permet de fixer ce maillon sur la paroi du rouleau 5. Lorsque le rouleau est métallique, cette fixation est assurée par soudure. Elle peut être assurée par collage avec un rouleau en matière synthétique.

La figure 5 montre que les dimensions du rouleau 5 et des galets 7 sont déterminées de manière que chaque galet 7 vienne au contact de la charge A, sensiblement dans le plan horizontal PH de contact de cette charge avec les rouleaux normaux 3 du convoyeur. Cette figure montre également que, en raison du gauchissement donné aux maillons, lorsqu'un galet 7 est en position de contact avec la charge A, son axe de rotation y'-y est incliné par rapport au plan diamétral horizontal H du cylindre.

Dans la forme d'exécution représentée à la figure 6 montrant l'application du dispositif selon l'invention à la réalisation d'un aiguillage entre un premier convoyeur C1 et un second convoyeur C2, transversal au premier, ce dispositif comprend deux rouleaux 5. Ces rouleaux sont identiques, c'est à dire comportent des chaînes à galets 6 enroulées dans le même sens et avec le même d'angle d'enroulement. Ces chaînes sont matérialisées par des barres 6a représentant leurs spires. Chacun des rouleaux est relié à des moyens d'entraînement en rotation 4 qui, dans cette forme d'exécution. sont communs avec ceux entraînant les rouleaux normaux 3. Le dispositif d'aiguillage constitué par les deux rouleaux 5 est disposé à l'extrémité du convoyeur C1 et est associé à une butée fixe 13, disposée en aval de lui et à l'extrémité du convoyeur C1. Dans ces conditions, lorsqu'une charge A est déplacée dans le sens de la flèche 14 par le convoyeur C1 et parvient sur les deux rouleaux 5, elle est déplacée longitudinalement par ces rouleaux, de la même manière que par les rouleaux 3. Par contre, dès qu'elle vient en butée contre la butée 13, elle est soumise par les galets 7 qui roulent contre sa paroi inférieure, à une force transversale la chassant vers la droite si l'hélice des chaînes 6 est vers la droite, comme représenté, ou vers la gauche si cette hélice est vers la gauche. En d'autres termes, les rouleaux 5 du dispositif d'aiguillage assurent instantanément le transfert de la charge A sur le convoyeur C2 dès que cette charge est soumise à un effort s'opposant à son avancement.

Dans la forme d'exécution représentée à la figure 7, le dispositif selon l'invention n'est pas disposé au bout du convoyeur C1 mais dans un tronçon de celui-ci, de sorte que ce convoyeur C1 se prolonge au-delà du dispositif d'aiguillage. Ce convoyeur C1 est équipé d'une butée 13a qui, disposée en aval du dispositif, est escamotable verticalement. Dans ces conditions, si la butée 13a est en position inférieure escamotée, c'est à dire au-dessous du plan de déplacement des charges sur le convoyeur C1, toute charge A circulant sur ce convoyeur et parvenant sur les rouleaux 5 à chaîne à galets, continue sa trajectoire rectiligne, représentée par la flèche 14. Par contre, si la butée 13a est déplacée verticalement pour venir dans la trajectoire de la charge A, cette charge est déplacée transversalement sur le convoyeur C2, comme représenté par la flèche 15.

Il apparaît que la combinaison du dispositif d'aiguillage, selon l'invention, avec une butée escamotable permet de réaliser un aiguillage simple et peu encombrant pouvant être commandé à distance.

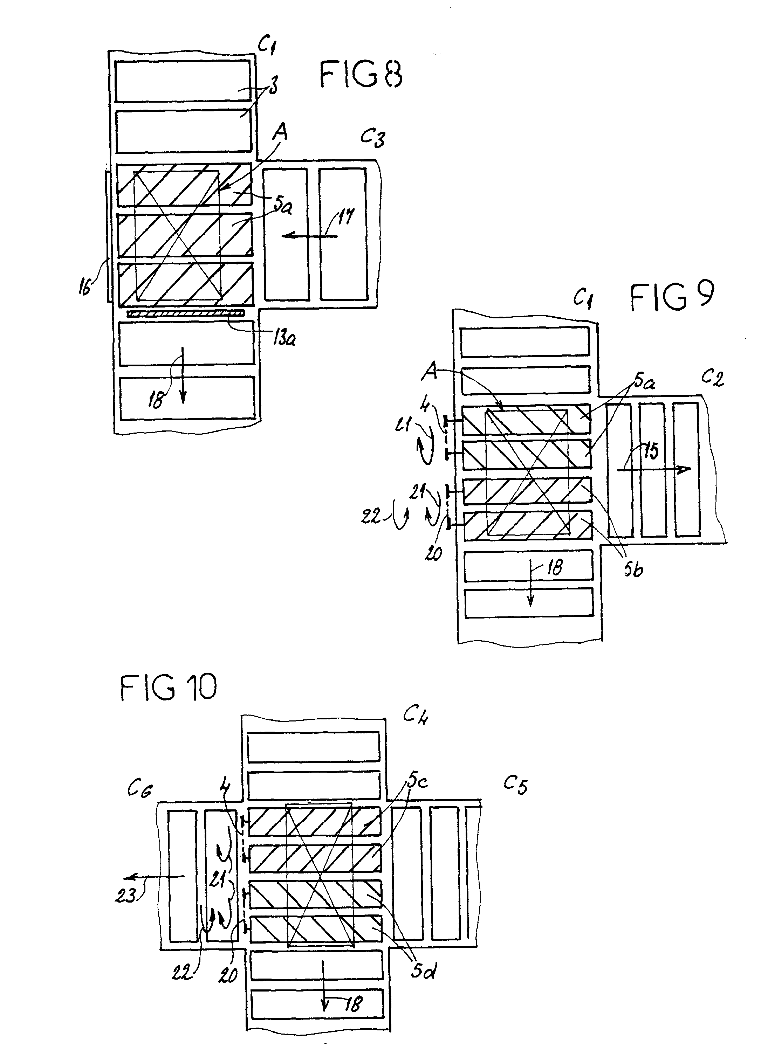

Dans la forme d'exécution représentée à la figure 8, le convoyeur C1 est continu et est associé à un convoyeur d'alimentation transversal C3. Le dispositif d'aiguillage comporte trois rouleaux 5a dont les chaînes 6 à galets 7 sont enroulées avec le même angle d'hélice et avec des hélices à gauche. Les rouleaux 5a sont entraînés dans le même sens et à la même vitesse que les rouleaux 3 du convoyeur C1. Le dispositif comprend une butée 13a, escamotable verticalement et disposée transversalement à la trajectoire de déplacement du convoyeur C1, en aval des rouleaux 5a, et une butée fixe 16 disposée sur le bord du convoyeur C1, qui est opposé au convoyeur C3 et dans la trajectoire de ce convoyeur C3.

Toute charge A, déplacée par le convoyeur C3 dans le sens de la flèche 17 et pénétrant sur le convoyeur C1, est déplacée dans le sens de la flèche 18 par les rouleaux 5a puis vient en butée contre la butée télescopique 13a qui est dressée. Dans ces conditions, les galets 7 des rouleaux 5a déplacent la charge A dans le sens de la flèche 17 jusqu'au contact de la butée 16, puis la butée 13a est abaissée de manière à libérer la charge A qui, alors, est entraînée par les rouleaux 5a dans le sens de la flèche 10.

On notera que, moyennant la présence d'un contacteur ou capteur sur la butée 16 détectant l'appui de la charge A, l'abaissement de la butée escamotable 13a peut s'effectuer de manière automatique. Il en est de même pour son élévation qui peut être déclenchée par passage de la charge sur un contacteur ou un capteur disposé dans le convoyeur C3.

Dans la forme d'exécution représentée à la figure 9, les moyens de retenue de la charge A constitués jusqu'à présent par des butées, sont remplacés par deux autres rouleaux 5b à chaînes à galets disposés en aval, mais à côté des premiers rouleaux 5. Sur ces rouleaux 5b, les chaînes 6 à galets 7 sont enroulées en sens inverse de celles des rouleaux 5 et, par exemple, sont enroulées avec une hélice à gauche si les rouleaux 5 ont une hélice à droite. En outre, ces deux rouleaux 5b sont reliés à des moyens moteurs 20 qui sont distincts des moyens 4 assurant l'entraînement en rotation des rouleaux 5 et qui, en plus, sont réversibles, c'est à dire peuvent entraîner les rouleaux 5b dans un sens ou dans l'autre.

Quand une charge A pénètre sur cet aiguillage, si les rouleaux 5b tourne dans le même sens que les rouleaux 5, c'est à dire dans le sens des flèches 21, la charge A passe sur eux sans être déportée et poursuit donc sa trajectoire représentée par la flèche 18. Par contre, si les rouleaux 5b sont entraînés en rotation dans le sens de la flèche 22, il freine la charge. Il en résulte que leurs galets 7, comme d'ailleurs les galets 7 des rouleaux 5, exercent sous cette charge un effort dans le sens de la flèche 15 qui tend à chasser la charge sur le convoyeur C2.

La retenue de la charge par les rouleaux 5b à chaînes à galets en remplacement des butées, par exemple de celle 13a à la figure 7, présente l'avantage d'assurer un arrêt plus progressif de la charge. Elle permet donc d'appliquer ce dispositif d'aiguillage à des charges contenant des objets fragiles.

La figure 10 montre l'application du dispositif à un aiguillage pour croisement en croix entre un premier convoyeur C4 et un convoyeur latéral C5 prolongé au-delà du convoyeur C4 par un autre convoyeur C6.

Le dispositif d'aiguillage est composé de deux paires de rouleaux à galets, à savoir deux rouleaux 5c portant chacun une chaîne 6 à galets 7 enroulée hélicoïdalement avec une hélice à gauche et une paire de rouleaux 5d équipés d'une chaîne à galets enroulée hélicoïdalement à droite. La première paire de rouleaux 5c est entraînée en rotation par les mêmes moyens 4 que ceux entraînant les rouleaux 3 du convoyeur C4, tandis que les rouleaux 5d sont entraînés par des moyens 20 distincts et réversibles.

Lorsqu'une charge A circule sur le convoyeur C4 et aborde le dispositif d'aiguillage 5c, 5d, elle continue sur sa trajectoire rectiligne, représentée par la flèche 18, si les rouleaux 5d tournent dans le sens de la flèche 21, c'est à dire dans le même sens que les rouleaux 3 du convoyeur C4. Par contre, elle est transférée sur le convoyeur C6 si les rouleaux 5d tournent dans le sens de la flèche 22. De même, si une charge circulant sur le convoyeur C5 aborde l'aiguillage, et que les deux rouleaux 5d tournent dans le sens de la flèche 22, elle continue sa trajectoire en direction du convoyeur C6 dans le sens de la flèche 23, tandis que si les rouleaux 5d tournent dans le sens de la flèche 21, elle est chassée par les galets 7 sur le convoyeur C4 dans le sens de la flèche 18.

Il ressort de ce qui précède que le dispositif selon l'invention permet, pour un encombrement réduit, de réaliser des aiguillages entre convoyeur permettant de transférer, à angle droit ou selon tout autre angle, les charges provenant d'un convoyeur.

Dans une autre application montrée figure 10, le dispositif selon l'invention permet de freiner ou ralentir une charge. Ses rouleaux 5e sont au moins au nombre de deux, et peuvent donc être plus, et portent des tronçons 6b de chaînes 6 qui, enroulées sur eux avec un angle d'hélice nul, forment des anneaux espacés. L'axe des galets 7 est donc parallèle à l'axe de rotation des rouleaux 5e. Ces rouleaux sont entraînés en rotation par des moyens moteurs 24 qui sont indépendants pour chaque rouleau et indépendants des moyens 4 assurant l'entraînement en rotation des rouleaux normaux 3 du convoyeur. Chacun de ces moyens moteurs 24 peut entraîner l'un des rouleaux 5e avec une vitesse linéaire périphérique V2 qui est différente de la vitesse linéaire V1 des rouleaux 3 et de chacun des rouleaux 5e suivants. Si la vitesse V2 et inférieure à la vitesse V1 et décroît au fur et à mesure que les rouleaux 5b se déplacent vers l'aval, ces rouleaux 5e assurent un freinage progressif de la charge, sans entraîner d'à-coup. Par contre, si la vitesse V2 est supérieure à la vitesse V1 et croît pour chaque rouleau 5e en aval du précédent, ils assurent l'accélération progressive de la charge.

On notera que, en fonction des besoins, les mêmes rouleaux peuvent être alternativement freinants ou accélérants.

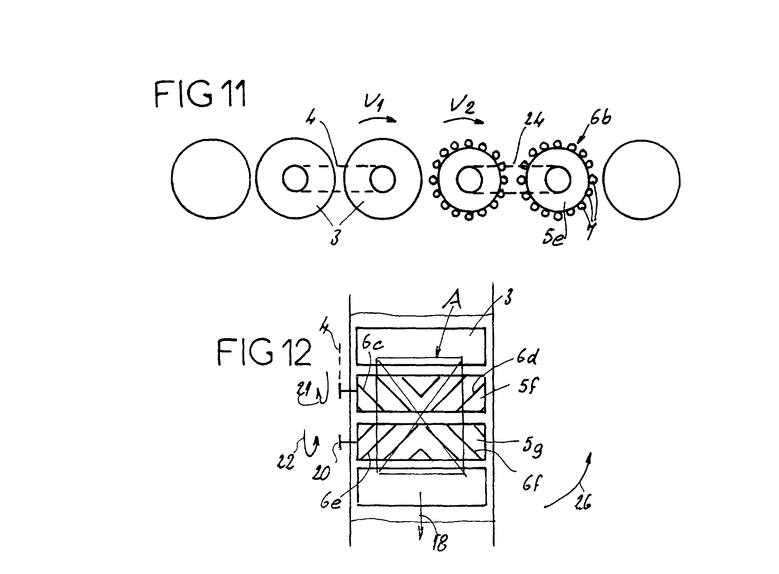

La figure 12 montre l'application du dispositif selon l'invention à la modification de l'orientation d'une charge sur un convoyeur.

Dans cette application, le dispositif comporte, au moins deux rouleaux respectivement amont 5f et aval 5g portant chacun deux tronçons de chaînes 6 enroulés en hélice, à savoir sur le rouleau 5f, sur sa partie gauche, un tronçon 6c enroulé à droite, et, sur sa partie droite, un tronçon 6d enroulé à gauche, et pour le rouleau 5g, sur sa partie gauche, un tronçon 6e enroulé à gauche et, sur sa partie droite, un tronçon 6f enroulé à droite. Le rouleau amont 5f, qui est destiné à pivoter dans le même sens et avec la même vitesse que les rouleaux normaux 3 du convoyeur, peut être relié aux moyens 4 d'entraînement de ce convoyeur ou comporter des moyens moteurs indépendants. Quant au rouleau aval 5g, il est entraîné par des moyens moteurs indépendants et réversibles 20.

Lorsque le rouleau aval 5g est entraîné en rotation dans le même sens que le rouleau 5f, c'est à dire dans le sens de la flèche 21, la charge A passant sur le dispositif n'est soumise à aucune déviation et continue sa trajectoire dans le sens de la flèche 18. Par contre, si le rouleau 5g est entraîné en rotation en sens inverse du rouleau 5f, c'est à dire dans le sens de la flèche 22, ses galets 7 venant en contact avec le fond de la charge A tendent à arrêter le déplacement de celle-ci, et à la faire pivoter sur ce rouleau 5g, dans le sens de la flèche 26. Dès que la charge a pivoté de 90°, l'alimentation du moteur 20 est inversé et le rouleau 5g est entraîné en sens inverse pour évacuer la charge.

Cette rotation de la charge peut s'effectuer sur 90 ° ou 180 °. Elle est utile, par exemple pour orienter la charge en prévision des fonctions assurées par un poste suivant ou en prévision de son transfert sur un convoyeur transversal l'amenant à un poste nécessitant un positionnement différent.

Il ressort de ce qui précède que le dispositif selon l'invention est simple et facile à réaliser, est adaptable sur les convoyeurs existants et procure de nombreuses applications modifiant les conditions de déplacement d'une charge sur un convoyeur à rouleaux.

## Revendications

1. Dispositif pour modifier les conditions de déplacement d'une charge (A) déplacée par un convoyeur à rouleaux (C) composé d'un châssis (2) portant des prémiers rouleaux (3), parallèles et horizontaux, montés libres en rotation dans le châssis et reliés à des moyens (4) aptes à les entraîner en rotation, au moins dans un sens, dispositif comprenant au moins deux seconds rouleaux (5), parallèles aux rouleaux (3) du convoyeur, reliés à des moyens d'entraînement en rotation et portant chacun des corps rotatifs (7), libres en rotation et dont l'axe de rotation est excentré et incliné par rapport à l'axe longitudinal du second rouleau (5) qui le porte **caractérisé en ce que** les corps rotatifs de chacun des seconds rouleaux (5) sont constitués par les galets (7) d'une chaîne à galets (6) dont plusieurs anneaux ou spires sont enroulés et fixés sur la périphérie dudit rouleau, chacun de ces galets a) ayant un axe de rotation formant par rapport à l'axe de rotation du second rouleau (5) un angle compris entre 0 et 60 °, b) étant libre en rotation par rapport à ses maillons (9, 10) et, c) dépassant au moins localement de ceux-ci pour venir en contact avec la charge, dans le plan d'appui délimité par les autres rouleaux (3) du convoyeur.

2. Dispositif selon la revendication 1, **caractérisé en ce que** chacun des maillons (9, 10) de la chaîne (6) est gauchi en rapport avec la valeur de l'angle (a) de l'hélice d'enroulement de la chaîne (6) et du diamètre externe du second rouleau (5) sur lequel elle est appliquée.

3. Dispositif selon l'ensemble des revendications 1 et 2, **caractérisé en ce que**, au moins certains des maillons externes (10) de la chaîne (6) sont munis d'une patte inférieure coudée (10b), pour leur fixation sur la périphérie du second rouleau (5).

4. Dispositif selon l'une quelconque des revendications 1 à 3, **caractérisé en ce que** les moyens (20) d'entraînement en rotation des seconds rouleaux (5b, 5d, 5g) sont réversibles.

5. Dispositif selon la revendication 1, **caractérisé en ce qu'**il comprend, sur un premier convoyeur (C1, C4), au moins deux seconds rouleaux (5, 5a, 5c) qui, portant des chaînes (6) à galets (7) ayant le même sens et le même angle d'enroulement, sont dans le prolongement d'un second convoyeur (C2, C3, C5) disposé transversalement au premier et sont associés à des moyens (13, 13a, 5b) de retenue de la charge (A) en déplacement sur le premier convoyeur.

6. Dispositif selon la revendication 5, **caractérisé en ce que** les moyens de retenue de la charge (A) sont constitués par une butée (13a), eclipsable verticalement, aptes à venir dans la trajectoire de déplacement des charges (A) sur le premier convoyeur (C1) et disposée en aval des rouleaux (5, 5a) à chaînes (6) à galets (7).

7. Dispositif selon la revendication 5, **caractérisé en ce que** le premier convoyeur (C1) comporte également une butée fixe (16) qui, disposée dans la trajectoire des charges (A) venant sur lui en provenance du second convoyeur transversal (C2), est sur sa partie qui est opposée à ce convoyeur transversal (C2).

8. Dispositif selon la revendication 5, **caractérisé en ce que** les moyens de retenue de la charge (A) sont constitués par deux troisiemes rouleaux (5b) à chaînes (6) à galets (7) disposés en aval des seconds rouleaux (5), mais dont le sens d'enroulement des chaînes (6) est inverse de celui des chaînes (6) de ces seconds rouleaux (5), ces troisiemes rouleaux (5b) étant reliés à des moyens (20) d'entraînement en rotation distincts de ceux (4) des seconds rouleaux (5) et dont le sens de rotation est réversible.

9. Dispositif selon la revendication 1, **caractérisé en ce qu'**il comprend, dans la zone de croisement de deux convoyeurs (C4, C5, C6) et parallèlement aux rouleaux (3) de l'un de ses convoyeurs, au moins quatre seconds rouleaux (5c, 5d) à chaînes à galets dont les chaînes (6) à galets (7) ont le même angle d'enroulement mais, pour deux rouleaux (5d), sont enroulées en sens inverse des chaînes à galets des deux autres rouleaux (5c), au moins deux rouleaux identiques (5d) étant reliés à des moyens (20) d'entraînement en rotation dont le sens de rotation est réversible.

10. Dispositif selon la revendication 1, **caractérisé en ce qu**'il comprend au moins deux seconds rouleaux (5e) sur chacun desquels des chaînes (6) à galets (7) sont enroulées avec un angle de spire nul et forment des anneaux (6b), ces rouleaux (5e) étant reliés à des moyens (24) d'entraînement en rotation, distincts de ceux (4) d'entraînement des rouleaux normaux (3) du convoyeur et aptes à entraîner les rouleaux (5e) à chaîne à galets à une vitesse différente de celle des rouleaux normaux (3), pour ralentir ou accélérer les charges.

11. Dispositif selon la revendication 1, **caractérisé en ce qu'**il comprend deux seconds rouleaux parallèles (5f, 5g) sur chacun desquels deux tronçons de chaînes galets sont enroulées avec le même angle d'enroulement, mais avec un sens d'enroulement différent, à savoir, pour le rouleau amont (5f), sur sa partie gauche, avec une hélice (6c) à droite, et sur sa partie droite avec une hélice (6d) à gauche, et pour le rouleau aval (5g), sur sa partie gauche avec une hélice (6e) à gauche, et sur sa partie droite avec une hélice (6f) à droite, ces deux rouleaux étant reliés à des moyens d'entraînement en rotation (4, 20) distincts dont au moins celui (20) du rouleau aval (5g) est de sens réversible, de manière que, lors de sa rotation en sens inverse de celle du rouleau amont (5f), ce rouleau aval provoque la rotation de la charge sur elle-même.

## Patentansprüche

1. Vorrichtung zum Ändern der Bedingungen für die Verschiebung einer Last (A), die mittels eines Rollenförderers (C) verschoben wird, der aus einem Gestell (2) mit mehreren parallelen und horizontalen Rollen bzw. Walzen (3) besteht, die in dem Gestell frei drehbar gelagert sind und mit Mitteln (4) verbunden sind, welche sie zumindest in einer Richtung in Drehung versetzten können, wobei die Vorrichtung mindestens zwei zweite Rollen bzw. Walzen (5) parallel zu den Rollen bzw. Walzen (3) des Förderers aufweist, die mit Drehantriebsmitteln verbunden sind und jeweils frei drehbare Drehkörper (7) tragen, deren Drehachse exzentrisch und bezüglich der Längsachse der sie tragenden zweiten Rolle bzw. Walze (5) geneigt ist, **dadurch gekennzeichnet, dass** die Drehkörper jeder der zweiten Rollen bzw. Walzen (5) durch kleine Rollen (7) einer Rollenkette (6) gebildet sind, von denen mehrere Ringe oder Windungen auf dem Umfang der Rolle bzw. Walze aufgerollt und befestigt sind, wobei jede dieser kleinen Rollen a) eine Drehachse hat, die bezüglich der Drehachse der zweiten Rolle bzw. Walze (5) einen Winkel hat, der zwischen 0 und 60° liegt, b) bezüglich ihrer Kettenglieder (9, 10) frei drehbar ist, und c) zumindest örtlich aus diesen herausragt, um mit der Ladung in der durch die anderen Rollen bzw. Walzen (3) des Förderers begrenzten Auflageebene in Berührung zu kommen.

2. Vorrichtung nach Anspruch 1, **dadurch gekennzeichnet, dass** jedes der Kettenglieder (9, 10) der Kette (6) verwunden ist bezüglich des Wertes des Winkels (a) der Wicklungsschraube der Kette (6) und des Aussendurchmessers der zweiten Rolle bzw. Walze (5), auf der sie angebracht ist.

3. Vorrichtung nach Anspruch 1 und 2, **dadurch gekennzeichnet, dass** mindestens einige der äusseren Kettenglieder (10) der Kette (6) mit einem abgewinkelten unteren Ansatz (10b) für ihre Befestigung auf dem Rand der zweiten Rolle bzw. Walze (5) ausgestattet sind.

4. Vorrichtung nach einem der Ansprüche 1 bis 3, **dadurch gekennzeichnet, dass** die Mittel (20) für den Drehantrieb der zweiten Rollen bzw. Walzen (5b, 5d, 5g) umkehrbar sind.

5. Vorrichtung nach Anspruch 1, **dadurch gekennzeichnet, dass** sie auf einem ersten Förderer (C1, C4) mindestens zwei zweite Rollen bzw. Walzen (5, 5a, 5c) aufweist, welche Ketten (6) mit kleinen Rollen (7) tragen, die dieselbe Wicklungsrichtung und denselben Wicklungswinkel haben, und welche sich in der Verlängerung eines zweiten Förderers (C2, C3, C5) befinden, der quer zum ersten angeordnet ist, und welche Mitteln (13, 13a, 5b) zum Halten der verschobenen Ladung (A) auf dem ersten Förderer zugeordnet sind.

6. Vorrichtung nach Anspruch 5, **dadurch gekennzeichnet, dass** die Mittel zum Halten der Ladung (A) durch einen vertikal einziehbaren Anschlag (13a) gebildet sind, in die Verschiebungsbahn der Ladungen (A) auf dem ersten Förderer (C1) gelangen können und förderabseitig von den Rollen bzw. Walzen (5, 5a) mit Ketten (6) mit kleinen Rollen (7) angeordnet sind.

7. Vorrichtung nach Anspruch 5, **dadurch gekennzeichnet, dass** der erste Förderer auch einen feststehenden Anschlag (16) aufweist, der in der Bahn der Ladungen (A), die auf ihm von dem zweiten Querförderer (C2) ankommen, und auf seinem Teil ist, der gegenüberliegend von dem Querförderer (C2) ist.

8. Vorrichtung nach Anspruch 5, **dadurch gekennzeichnet, dass** die Mittel zum Halten der Ladung (A) durch zwei dritte Rollen bzw. Walzen (5b) mit Ketten (6) mit kleinen Rollen (7) gebildet sind, die förderabseitig von den zweiten Rollen bzw. Walzen (5) angeordnet sind, bei denen jedoch die Wicklungsrichtung der Ketten (6) umgekehrt von derjenigen der Ketten (6) dieser zweiten Rollen bzw. Walzen (5) ist, wobei die dritten Rollen bzw, Walzen (5b) mit Mitteln (20) für den Drehantrieb verbunden sind, die von denjenigen (4) der zweiten Rollen bzw. Walzen (5) gesondert sind und deren Drehrichtung umkehrbar ist.

9. Vorrichtung nach Anspruch 1, **dadurch gekennzeichnet, dass** sie in dem Kreuzungsbereich von zwei Förderern (C4, C5, C6) und parallel zu den Rollen bzw. Walzen (3) eines dieser Förderer mindestens vier zweite Rollen bzw. Walzen (5c, 5d) mit Ketten mit kleinen Rollen aufweist, deren Ketten (6) mit kleinen Rollen (7) denselben Wicklungswinkel haben, jedoch für zwei Rollen bzw. Walzen (5d) in der umgekehrten Richtung zu den Ketten mit Walzen der beiden anderen Rollen (5c) gewickelt sind, wobei mindestens zwei identische Rollen bzw. Walzen (5d) mit Mitteln (20) für den Drehantrieb verbunden sind, deren Drehrichtung umkehrbar ist.

10. Vorrichtung nach Anspruch 1, **dadurch gekennzeichnet, dass** sie mindestens zwei zweite Rollen bzw. Walzen (5e) aufweist, auf denen jeweils Ketten (6) mit kleinen Rollen (7) mit einem Wicklungswinkel von 0 aufgewickelt sind und Ringe (6b) bilden, wobei diese Rollen bzw. Walzen (5e) mit Mitteln (24) für den Drehantrieb verbunden sind, die von denjenigen (4) für den Antrieb der normalen Rollen bzw. Walzen (3) des Förderers gesondert sind und die Rollen bzw. Walzen (5e) mit Rollenkette mit einer anderen Geschwindigkeit als derjenigen der normalen Rollen bzw. Walzen (3) antreiben können, um die Ladungen zu beschleunigen oder zu verzögern.

11. Vorrichtung nach Anspruch 1, **dadurch gekennzeichnet, dass** sie zwei zweite parallele Rollen bzw. Walzen (5f, 5g) aufweist, auf denen jeweils zwei Rollenketten-Teilstücke mit demselben Wicklungswinkel, jedoch mit einer anderen Wicklungsrichtung aufgewickelt sind, und zwar für die förderaufseitige Walze bzw. Rolle (5f) auf ihrem linken Teil mit einer rechtsgängigen Schraube (6c) und auf ihrem rechten Teil mit einer linksgängigen Schraube (6d) und für die förderabseitige Rolle bzw. Walze (5g) auf ihrem linken Teil mit einer linksgängigen Schraube (6e) und auf ihrem rechten Teil mit einer rechtsgängigen Schraube (6f), wobei diese Rollen bzw. Walzen mit gesonderten Mitteln für den Drehantrieb (4, 20) verbunden sind, von denen zumindest jenes (20) der förderabseitigen Rolle bzw. Walze (5g) eine umkehrbare Richtung hat, so dass während der Drehung in der umgekehrten Richtung zu jenen der förderaufseitigen Rolle bzw. Walze (5f) diese förderabseitige Rolle bzw. Walze eine Drehung der Ladung um sich selbst herum bewirkt.

## Claims

1. Device for modifying the conditions of displacement of a load (A) displaced by a roll-type conveyer (C) made up of a frame (2) carrying first parallel and horizontal rolls (3), which are mounted so as to rotate freely in the frame and are connected to means (4) capable of driving them in rotation, at least in one direction, said device comprising at least two second rolls (5) which are parallel to the rolls (3) of the conveyer, are connected to means for driving them in rotation and each carry rotating bodies (7) which rotate freely and whose axis of rotation is eccentric and inclined in relation to the longitudinal axis of the second roll (5) that carries it, **characterised in that** the rotating bodies of each of the second rolls (5) are constituted by the rollers (7) of a roller chain (6) of which a number of coils or turns are wound onto, and fixed on, the periphery of said roll, each of said rollers: a) having an axis of rotation forming an angle of between 0 and 60° in relation to the axis of rotation of the second roll (5); b) rotating freely in relation to its links (9, 10); and c) protruding beyond the latter, at least in places, so as to come into contact with the load in the bearing plane delimited by the other rolls (3) of the conveyer.

2. Device according to claim 1, **characterised in that** each of the links (9, 10) of the chain (6) is averted in keeping with the value of the angle (a) of the winding helix of the chain (6) and of the external diameter of the second roll (5) to which it is applied.

3. Device according to the combination of claims 1 and 2, **characterised in that** at least certain of the outer links (10) of the chain (6) are equipped with a cranked lower foot (10b) for fixing them onto the periphery of the second roll (5).

4. Device according to any one of claims 1 to 3, **characterised in that** the means (20) for driving the second rolls (5b, 5d, 5g) in rotation are reversible.

5. Device according to claim 1, **characterised in that** it comprises, on a first conveyer (C1, C4), at least two second rolls (5, 5a, 5c) which, carrying chains (6) with rollers (7) having the same direction and the same angle of winding, are in the prolongation of a second conveyer (C2, C3, C5) disposed transversely to the first, and are associated with means (13, 13a, 5b) for holding the load (A) in displacement on the first conveyer.

6. Device according to claim 5, **characterised in that** the means for holding the load (A) are constituted by a stop (13a) which can be retracted vertically, is capable of coming into the path of displacement of the loads (A) on the first conveyer (C1), and is disposed downstream of the rolls (5, 5a) with chains (6) with rollers (7).

7. Device according to claim 5, **characterised in that** the first conveyer (C1) also has a fixed stop (16) which, disposed in the path of the loads (A) coming onto it from the second transverse conveyer (C2), is on the part thereof which is opposed to said transverse conveyer (C2).

8. Device according to claim 5, **characterised in that** the means for holding the load (A) are constituted by two third rolls (5b) with chains (6) with rollers (7), which rolls are disposed downstream of the second rolls (5) but of which the direction of winding of the chains (6) is the opposite to that of the chains (6) of said second rolls (5), said third rolls (5b) being connected to means (20) for driving them in rotation which are distinct from those (4) of the second rollers (5) and the direction of rotation of which is reversible.

9. Device according to claim 1, **characterised in that** it comprises, in the zone in which two convoyers (C4, C5, C6) cross and parallel to the rolls (3) of one of its conveyers, at least four second rolls (5c, 5d) with roller chains, of which the chains (6) with rollers (7) have the same angle of winding but, in the case of two rolls (5d), are wound in the opposite direction to the roller chains of the other two rolls (5c), at least two identical rolls (5d) being connected to means (20) for driving them in rotation, the direction of rotation of which is reversible.

10. Device according to claim 1, **characterised in that** it comprises at least two second rolls (5e) on each of which chains (6) with rollers (7) are wound with a zero turn angle and form coils (6b), said rolls (5e) being connected to means (24) for driving them in rotation which are distinct from those (4) for driving the normal rolls (3) of the conveyer and are capable of driving the roller-chain rolls (5e) at a speed which is different from that of the normal rolls (3), in order to slow down or accelerate the loads.

11. Device according to claim 1, **characterised in that** it comprises two second parallel rolls (5f, 5g) on each of which two lengths of roller chains are wound with the same angle of winding but with a different direction of winding, namely, in the case of the upstream roll (5f), on its left part with a right-hand helix (6c) and on its right part with a left-hand helix (6d), and in the case of the downstream roll (5g), on its left part with a left-hand helix (6e) and on its right part with a right-hand helix (6f), said two rolls being connected to distinct means (4, 20) for driving them in rotation, of which at least that (20) of the downstream roll (5g) is reversible in direction in such a way that, when it rotates in the opposite direction to that of the upstream roll (5f), said downstream roll gives rise to rotation of the load on itself.
